# EUROPÄISCHE PATENTSCHRIFT

(11) **EP 2 789 492 B1**
(45) Veröffentlichungstag und Bekanntmachung des Hinweises auf die Patenterteilung: **05.07.2017**
(21) Anmeldenummer: 14000132.2
(22) Anmeldetag: 15.01.2014
(51) Int. Cl.: B60K 25/00, B60K 25/02

(54) **Antriebssystem für ein Kraftfahrzeug**
Drive system for a motor vehicle
Dispositif d'entraînement de véhicule automobile

(30) Priorität: 09.04.2013 DE 102013006089
(43) Veröffentlichungstag der Anmeldung: 15.10.2014
(73) Patentinhaber: MAN Truck & Bus AG, 80995 München (DE)
(72) Erfinder: Hase, Andreas, 80993 München (DE)
(74) Vertreter: v. Bezold & Partner Patentanwälte - PartG mbB

(56) Entgegenhaltungen:
- DE-A1-102008 021 976
- DE-T2- 69 831 049
- US-A- 3 844 130

## Beschreibung

Die Erfindung betrifft ein Antriebssystem für ein Kraftfahrzeug, vorzugsweise ein Nutzfahrzeug.

Als Stand der Technik sind zunächst die DE 698 31 049 T2, in der die Merkmale des Oberbegriffs von Anspruch 1 enthalten sind, die US 3 844 130 A und die DE 10 2008 021976 A1 zu nennen.

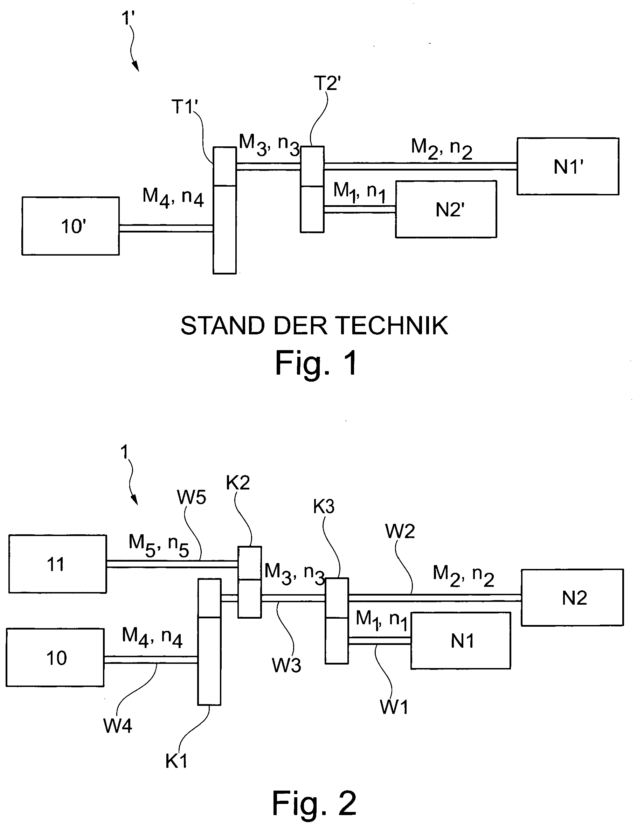

Figur 1 zeigt eine schematische Darstellung eines aus dem Stand der Technik bekannten Antriebssystems 1'. Das Antriebssystem 1' umfasst einen Verbrennungsmotor 10' zum Antreiben des Kraftfahrzeugs und zumindest zwei Nebenaggregate N1', N2'. Der Verbrennungsmotor 10' dient dazu, über eine nicht-schaltbare Kupplung T1' und eine schaltbare Kupplung T2' die Nebenaggregate N1', N2' anzutreiben. Nachteilhaft an dem Antriebssystem 1' ist, dass die Nebenaggregate N1', N2' nicht bedarfsabhängig, insbesondere nicht drehzahlgeregelt angetrieben werden können.

Eine Aufgabe der Erfindung ist es, ein verbessertes und/oder alternatives Antriebssystem für ein Kraftfahrzeug, vorzugsweise Nutzfahrzeug, zu schaffen.

Diese Aufgabe wird mit den Merkmalen des Hauptanspruchs gelöst. Vorteilhafte Weiterbildungen der Erfindung können den Unteransprüchen und der folgenden Beschreibung entnommen werden.

Die Erfindung schafft ein Antriebssystem für ein Kraftfahrzeug, vorzugsweise ein Nutzfahrzeug, gemäß Hauptanspruch.

Das Antriebssystem umfasst zumindest einen Antriebsmotor (z.B. einen Verbrennungsmotor und/oder eine Elektroantriebsmaschine) zum Antreiben des Kraftfahrzeugs und zumindest zwei Nebenaggregate. Das Antriebssystem zeichnet sich insbesondere dadurch aus, dass es einen Elektromotor aufweist und so ausgeführt ist, dass zumindest eines der Nebenaggregate wahlweise von dem Antriebsmotor oder dem Elektromotor antreibbar ist.

Mittels des erfindungsgemäßen Antriebssystems können vorzugsweise ein oder mehrere der folgenden Vorteile erzielt werden:
- Reduzierte Hardwarekosten für Elektro-Hybrid-Kraftfahrzeug-Anwendungen, wo elektrisch angetriebene Nebenaggregate vorteilhaft oder erforderlich sind.
- Es ist nur ein Elektromotor zweckmäßig mit Inverter erforderlich, um mehrere Nebenaggregate antreiben zu können.
- Der Elektromotor ermöglicht den Betrieb insbesondere eines Luftpresseraggregats während Niederlastzyklen (low-load cycles) gemeinsam mit einem Lenkhilfspumpenaggregat. So ist z.B. das Lenkhilfspumpenaggregat ein Dauerverbraucher mit überwiegend geringer Last (z.B. <1kW) und weist nur extrem selten Lastspitzen (z.B. >3kW) auf. Das Luftpresseraggregat hingegen ist ein Verbraucher mit kontinuierlich hoher Last (z.B. >3kW), welcher nicht dauerhaft, sondern nur temporär hinzugeschaltet werden muss. Ein optimierter Luftpresser-Lastzyklus mittels des Antriebssystems ermöglicht eine kleinere Elektromotor-Auslegung für den Elektromotor-Antrieb der Nebenaggregate. Extreme Verbraucherspitzen können über den Antriebsmotor abgefangen werden.

Das Antriebssystem weist eine erste schaltbare Kupplung zum An- und Abkoppeln des Antriebsmotors und eine zweite schaltbare Kupplung zum An- und Abkoppeln des Elektromotors auf, wodurch zumindest eines der Nebenaggregate zweckmäßig wahlweise von dem Antriebsmotor oder dem Elektromotor antreibbar ist.

Die zwei Nebenaggregate sind über eine gemeinsame Triebwelle antreibbar. Die gemeinsame Triebwelle ist zweckmäßig wahlweise über den Antriebsmotor und die erste Kupplung und den Elektromotor und die zweite Kupplung antreibbar.

Die gemeinsame Triebwelle ist an eine dritte schaltbare Kupplung gekoppelt, über die wahlweise zumindest eines der Nebenaggregate antreibbar ist. Die dritte Kupplung dient insbesondere dazu, wahlweise das eine Nebenaggregat und/oder das andere Nebenaggregat anzutreiben. Das wahlweise an- oder abkoppelbare Nebenaggregat entspricht zweckmäßig keinem Dauerverbraucher, sondern ist temporär, bedarfsabhängig zuschaltbar.

Der Elektromotor ist vorzugsweise so ausgeführt, dass er die erste Kupplung, die zweite Kupplung und/oder die dritte Kupplung synchronisieren kann, z.B. während eines Moduswechsels zwischen einem elektromotorischen Antrieb und einem antriebsmotorischen Antrieb zumindest eines der Nebenaggregate.

Es ist möglich, dass die Nebenaggregate ein als Dauerverbraucher wirkendes Nebenaggregat (z.B. ein Lenkhilfspumpenaggregat) mit zweckmäßig geringer Last (z.B. <1kW) und ein temporär zuschaltbares Nebenaggregat (z.B. ein Luftkompressoraggregat) mit zweckmäßig hoher Last (z.B. >3kW) umfassen.

Vorzugsweise ist eines der Nebenaggregate ein Luftkompressoraggregat und/oder ein anderes der Nebenaggregate ein Lenkhilfspumpenaggregat.

Es ist möglich, dass das Antriebssystem eine Bedarfssteuerung (on-demand power control) umfasst und zumindest ein Nebenaggregat in Antriebsmotor-Zugphasen mittels der Bedarfssteuerung bedarfsabhängig und/oder drehzahlgeregelt über den Elektromotor antreibbar ist und zwar vorzugsweise ohne zusätzliche mechanische Steuer-/Regeleinheit an oder in dem oder den Nebenaggregaten. Im Rahmen der Erfindung umfasst die Bedarfssteuerung vorzugsweise auch eine Bedarfsregelung.

In Antriebsmotor-Schubphasen wird zumindest ein Nebenaggregat vorzugsweise über den Antriebsmotor angetrieben.

Die Erfindung ist nicht auf ein Antriebssystem beschränkt, sondern umfasst auch ein Kraftfahrzeug, vorzugsweise ein Nutzfahrzeug, z.B. einen Lastkraftwagen oder einen Omnibus, mit einem Antriebssystem wie hierin offenbart.

Die oben beschriebenen Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Ansicht eines Antriebssystems für ein Kraftfahrzeug gemäß Stand der Technik,
- Figur 2: zeigt eine schematische Ansicht eines Antriebssystems für ein Kraftfahrzeug gemäß einer Ausführungsform der Erfindung,
- Figur 3: zeigt eine schematische Ansicht des Antriebssystems aus Figur 2 im Antriebsmotor-Antriebsmodus und
- Figur 4: zeigt eine schematische Ansicht des Antriebssystems aus Figur 2 im Elektromotor-Antriebsmodus.

Figur 2 zeigt eine schematische Ansicht eines Antriebssystems 1 für ein Kraftfahrzeug, vorzugsweise ein Nutzfahrzeug, wie etwa einen Lastkraftwagen oder einen Omnibus, gemäß einer Ausführungsform der Erfindung.

Das Antriebssystem 1 umfasst einen Antriebsmotor 10 zum Antreiben des Kraftfahrzeugs, vorzugsweise einen Verbrennungsmotor. Der Antriebsmotor 10 könnte alternativ oder ergänzend auch eine Elektroantriebsmaschine zum Antreiben des Kraftfahrzeugs sein.

Das Antriebssystem 1 umfasst ferner zumindest zwei Nebenaggregate N1 und N2. Das Nebenaggregat N1 ist vorzugsweise ein Luftkompressornebenaggregat, während das Nebenaggregat N2 vorzugsweise ein Lenkhilfspumpennebenaggregat ist.

Das Antriebssystem 1 umfasst ferner einen Elektromotor 11 und ist so ausgeführt, dass die zwei Nebenaggregate N1, N2 wahlweise entweder von dem Antriebsmotor 10 oder dem Elektromotor 11 angetrieben werden können.

Der Verbrennungsmotor 10 ist über eine Triebwelle W4 mit einer schaltbaren ersten Kupplung K1 verbunden, während der Elektromotor 11 über eine Triebwelle W5 mit einer schaltbaren zweiten Kupplung K2 verbunden ist. Die erste Kupplung K1 dient dazu, den Antriebsmotor 10 An- und Abzukoppeln, während die zweite Kupplung K2 dazu dient, den Elektromotor 11 An- und Abzukoppeln.

Die Nebenaggregate N1, N2 können über eine gemeinsame Triebwelle W3 angetrieben werden. Die gemeinsame Triebwelle W3 ist wahlweise über den Verbrennungsmotor 10 und die erste Kupplung K1 oder den Elektromotor 11 und die zweite Kupplung K2 antreibbar.

Die gemeinsame Triebwelle W3 ist mit einer dritten schaltbaren Kupplung K3 verbunden. Die dritte schaltbare Kupplung K3 dient dazu, wahlweise das eine Nebenaggregat N1 oder das andere Nebenaggregat N2 oder beide Nebenaggregate N1, N2 zugleich anzutreiben. Die dritte Kupplung K3 ist über eine Triebwelle W2 mit dem Nebenaggregat N2 verbunden und mit einer Triebwelle W1 mit dem Nebenaggregat N1.

Das Antriebssystem 1 weist ferner eine nicht gezeigte Bedarfsteuerung, insbesondere eine sogenannte on-demand power control für die Nebenaggregate N1, N2 auf. Das Antriebssystem 1 ist so ausgeführt, dass es die Nebenaggregate N1, N2 in Verbrennungsmotor-Zugphasen mittels der Bedarfssteuerung bedarfsabhängig und insbesondere drehzahlgeregelt über den Elektromotor 11 antreibt, während die Nebenaggregate N1, N2 in Verbrennungsmotor-Schubphasen über den Verbrennungsmotor 10 angetrieben werden.

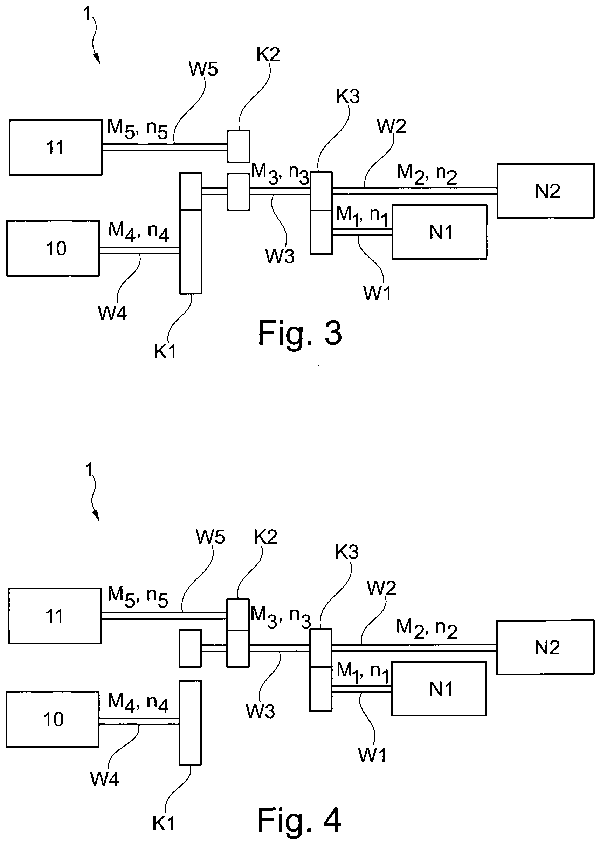

Der Elektromotor 11 ist so ausgeführt, dass er die erste Kupplung K1, die zweite Kupplung K2 und die dritte Kupplung K3 synchronisiert, insbesondere während eines Moduswechselns zwischen einem Verbrennungsmotor-Antriebsmodus (Figur 3) und einem Elektromotor-Antriebsmodus (Figur 4).

Figur 3 zeigt eine schematische Ansicht des Antriebssystems 1 aus Figur 2. Die zweite Kupplung K2 ist gelöst, so dass der Elektromotor 11 abgekoppelt ist. Die erste Kupplung K1 ist geschlossen, so dass der Verbrennungsmotor 10 angekoppelt ist. Der Verbrennungsmotor 10 treibt über die Welle W3 und die geschlossene Kupplung K3 sowohl das Nebenaggregat N1 als auch das Nebenaggregat N2 an. Figur 3 zeigt somit einen Verbrennungsmotor-Antriebsmodus. In diesem Zustand ist ein bedarfsabhängiger, insbesondere drehzahlgeregelter Betrieb der Nebenaggregate N1, N2 rein über die Welle W3 nicht möglich. Hierzu wären zusätzliche mechanische Regler in den Nebenaggregaten N1, N2 notwendig.

Figur 4 zeigt eine schematische Ansicht des Antriebssystems 1 aus Figur 2. Die zweite Kupplung K2 ist geschlossen, so dass der Elektromotor 11 angekoppelt ist. Die erste Kupplung K1 ist gelöst, so dass der Verbrennungsmotor 10 abgekoppelt ist. Der Elektromotor 11 treibt über die Welle W3 und die geschlossene Kupplung K3 sowohl das Nebenaggregat N1 als auch das Nebenaggregat N2 an. Figur 3 zeigt somit einen Elektromotor-Antriebsmodus. In diesem Zustand ist ein bedarfsabhängiger, insbesondere drehzahlgeregelter Betrieb der Nebenaggregate N1, N2 möglich, ohne zusätzlichen Aufwand eines mechanischen Reglers in den Nebenaggregaten N1, N2. Der bedarfsabhängige Betrieb ermöglicht zudem Kraftstoffeinsparpotenziale.

Zu erwähnen ist, dass die zuvor erwähnten schaltbaren Kupplungen K1, K2 und K3 zahnradbasiert oder zahnriemenbasiert ausgeführt sein können.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

## Patentansprüche

1. Antriebssystem (1) für ein Kraftfahrzeug, vorzugsweise Nutzfahrzeug, mit
- zumindest einem Antriebsmotor (10) zum Antreiben des Kraftfahrzeugs, vorzugsweise einem Verbrennungsmotor und/oder einer Elektroantriebsmaschine, und
- zumindest zwei Nebenaggregaten (N1, N2),
wobei
- das Antriebssystem (1) einen Elektromotor (11) aufweist, wobei
- das Antriebssystem (1) eine erste schaltbare Kupplung (K1) zum An- und Abkoppeln des Antriebsmotors (10) und eine zweite schaltbare Kupplung (K2) zum An- und Abkoppeln des Elektromotors (11) aufweist und zumindest eines der Nebenaggregate (N1, N2) somit wahlweise von dem Antriebsmotor (10) oder dem Elektromotor (11) antreibbar ist,
wobei
- die Nebenaggregate (N1, N2) über eine gemeinsame Triebwelle (W3) antreibbar sind und die gemeinsame Triebwelle (W3) wahlweise über den Antriebsmotor (10) und die erste Kupplung (K1) oder den Elektromotor (11) und die zweite Kupplung (K2) antreibbar ist,
**dadurch gekennzeichnet, dass**
- die gemeinsame Triebwelle (W3) mit einer dritten schaltbaren Kupplung (K3) verbunden ist, über die wahlweise das eine Nebenaggregat (N1) oder das andere Nebenaggregat (N2) oder das eine Nebenaggregat (N1) und das andere Nebenaggregat (N2) antreibbar ist.

2. Antriebssystem (1) nach Anspruch 1, **dadurch gekennzeichnet, dass** der Elektromotor (11) ausgeführt ist, die erste Kupplung (K1), die zweite Kupplung (K2) und/oder die dritte Kupplung (K3) zu synchronisieren, vorzugsweise während eines Moduswerhsels zwischen einem elektromotorischen Antrieb über den Elektromotor (11) und einem antriebsmotorischen Antrieb über den Antriebsmotor (10) zumindest eines der Nebenaggregate (N1, N2).

3. Antriebssystem (1) nach einem der vorhergehenden Ansprüche, **dadurch gekennzeichnet, dass** die Nebenaggregate (N1, N2) ein als Dauerverbraucher wirkendes Nebenaggregat (N2) und ein temporär zuschaltbares Nebenaggregat (N1) umfassen.

4. Antriebssystem (1) nach einem der vorhergehenden Ansprüche, **dadurch gekennzeichnet, dass** die Nebenaggregate (N1, N2) ein Luftkompressoraggregat und/oder ein Lenkhilfspumpenaggregat umfassen.

5. Antriebssystem (1) nach einem der vorhergehenden Ansprüche, **dadurch gekennzeichnet, dass** das Antriebssystem (1) eine Bedarfssteuerung aufweist und so ausgeführt ist, dass zumindest eines der Nebenaggregate (N1, N2) in Antriebsmotor-Zugphasen mittels der Bedarfsteuerung bedarfsabhängig und/oder drehzahlgeregelt über den Elektromotor (11) antreibbar ist, vorzugsweise ohne, dass dazu eine zusätzliche mechanische Steuer-/Regeleinheit an oder in dem Nebenaggregat (N1, N2) erforderlich ist.

6. Antriebssystem (1) nach einem der vorhergehenden Ansprüche, **dadurch gekennzeichnet, dass** das Antriebssystem (1) so ausgeführt ist, dass zumindest eines der Nebenaggregate (N1, N2) in Antriebsmotor-Schubphasen über den Antriebsmotor (10) antreibbar ist.

7. Kraftfahrzeug, vorzugsweise Nutzfahrzeug, mit einem Antriebssystem (1) nach einem der vorhergehenden Ansprüche.

## Claims

1. A drive system (1) for a motor vehicle, preferably a commercial vehicle, having
- at least one drive motor (10) for driving the motor vehicle, preferably an internal combustion engine and/or an electric drive machine, and
- at least two auxiliary units (N1, N2),
- the drive system (1) having an electric motor (11),
- the drive system (1) having a first switchable clutch (K1) for coupling and disconnecting the drive motor (10) and a second switchable clutch (K2) for coupling and disconnecting the electric motor (11), and it therefore being possible for at least one of the auxiliary units (N1, N2) to be driven selectively by the drive motor (10) or the electric motor (11),
- it being possible for the auxiliary units (N1, N2) to be driven via a common drive shaft (W3), and it being possible for the common drive shaft (W3) to be driven selectively via the drive motor (10) and the first clutch (K1) or the electric motor (11) and the second clutch (K2),
**characterized in that**
- the common drive shaft (W3) is connected to a third switchable clutch (K3), via which the one auxiliary unit (N1) or the other auxiliary unit (N2), or the one auxiliary unit (N1) and the other auxiliary unit (N2), can be driven selectively.

2. The drive system (1) according to Claim 1, **characterized in that** the electric motor (11) is configured to synchronize the first clutch (K1), the second clutch (K2) and/or the third clutch (K3), preferably during a mode change between an electric motor drive via the electric motor (11) and a drive motor drive via the drive motor (10) of at least one of the auxiliary units (N1, N2).

3. The drive system (1) according to either of the preceding claims, **characterized in that** the auxiliary units (N1, N2) comprise one auxiliary unit (N2) which acts as a permanent consumer and one auxiliary unit (N1) which can be switched in temporarily.

4. The drive system (1) according to one of the preceding claims, **characterized in that** the auxiliary units (N1, N2) comprise an air compressor unit and/or a power steering pump unit.

5. The drive system (1) according to one of the preceding claims, **characterized in that** the drive system (1) has a demand controller and is configured in such a way that at least one of the auxiliary units (N1, N2) can be driven via the electric motor (11) in drive motor traction phases by means of the demand controller in a manner which is dependent on the demand and/or is speed-controlled, preferably without an additional mechanical control/regulating unit being required to this end on or in the auxiliary unit (N1, N2).

6. The drive system (1) according to one of the preceding claims, **characterized in that** the drive system (1) is configured in such a way that at least one of the auxiliary units (N1, N2) can be driven via the drive motor (10) in drive motor overrun phases.

7. A motor vehicle, preferably commercial vehicle, having a drive system (1) according to one of the preceding claims.

## Revendications

1. Système d'entraînement (1) pour un véhicule automobile, de préférence un véhicule utilitaire, comprenant
- au moins un moteur d'entraînement (10) pour l'entraînement du véhicule automobile, de préférence un moteur à combustion et/ou une machine d'entraînement électrique, et
- au moins deux groupes auxiliaires (N1, N2),
- le système d'entraînement (1) présentant un moteur électrique (11),
- le système d'entraînement (1) présentant un premier embrayage commutable (K1) pour l'accouplement et le désaccouplement du moteur d'entraînement (10) et un deuxième embrayage commutable (K2) pour l'accouplement et le désaccouplement du moteur électrique (11), et au moins l'un des groupes auxiliaires (N1, N2) pouvant ainsi être entraîné de manière sélective par le moteur d'entraînement (10) ou par le moteur électrique (11),
- les groupes auxiliaires (N1, N2) pouvant être entraînés par le biais d'un arbre d'entraînement commun (W3) et l'arbre d'entraînement commun (W3) pouvant être entraîné de manière sélective par le biais du moteur d'entraînement (10) et du premier embrayage (K1) ou par le biais du moteur électrique (11) et du deuxième embrayage (K2),
**caractérisé en ce que**
- l'arbre d'entraînement commun (W3) est raccordé à un troisième embrayage commutable (K3) par le biais duquel l'un des groupes auxiliaires (N1) ou l'autre groupe auxiliaire (22) ou l'un des groupes auxiliaires (N1) et l'autre groupe auxiliaire (N2) peuvent être entraînés de manière sélective.

2. Système d'entraînement (1) selon la revendication 1, **caractérisé en ce que** le moteur électrique (11) est réalisé pour synchroniser le premier embrayage (K1), le deuxième embrayage (K2) et/ou le troisième embrayage (K3), de préférence pendant un changement de mode entre un entraînement par moteur électrique par le biais du moteur électrique (11) et un entraînement par moteur d'entraînement par le biais du moteur d'entraînement (10) d'au moins l'un des groupes auxiliaires (N1, N2).

3. Système d'entraînement (1) selon l'une quelconque des revendications précédentes, **caractérisé en ce que** les groupes auxiliaires (N1, N2) comprennent un groupe auxiliaire (N2) fonctionnant en tant que consommateur permanent et un groupe auxiliaire (N1) pouvant être branché temporairement.

4. Système d'entraînement (1) selon l'une quelconque des revendications précédentes, **caractérisé en ce que** les groupes auxiliaires (N1, N2) comprennent un groupe de compresseur d'air et/ou un groupe de pompe de servo-direction.

5. Système d'entraînement (1) selon l'une quelconque des revendications précédentes, **caractérisé en ce que** le système d'entraînement (1) présente une gestion de la commande et est réalisé de telle sorte qu'au moins l'un des groupes auxiliaires (N1, N2) puisse être entraîné dans les phases de traction du moteur d'entraînement au moyen de la gestion de la demande en fonction des besoins et/ou avec une régulation de régime par le biais du moteur électrique (11), de préférence sans devoir pour cela utiliser une unité de commande/régulation mécanique supplémentaire sur ou dans le groupe auxiliaire (N1, N2).

6. Système d'entraînement (1) selon l'une quelconque des revendications précédentes, **caractérisé en ce que** le système d'entraînement (1) est réalisé de telle sorte qu'au moins l'un des groupes auxiliaires (N1, N2) puisse être entraîné dans des phases de poussée du moteur d'entraînement par le biais du moteur d'entraînement (10).

7. Véhicule automobile, en particulier véhicule utilitaire comprenant un système d'entraînement (1) selon l'une quelconque des revendications précédentes.
